# EUROPEAN PATENT APPLICATION

(11) **EP 4 641 212 A1**
(43) Date of publication of application: **29.10.2025**
(21) Application number: 23906647.5
(22) Date of filing: 30.11.2023
(51) Int. Cl.: G01N 35/02

(54) **AUTOMATIC ANALYSIS DEVICE**

(30) Priority: 23.12.2022 JP 2022207547
(71) Applicant: HITACHI HIGH-TECH CORPORATION, Tokyo 105-6409 (JP)
(72) Inventor: MATSUDA Kyohei, Tokyo 105-6409 (JP)
(74) Representative: Strehl & Partner mbB
(86) International application number: PCT/JP2023/042966
(87) International publication number: WO 2024/135279

(57) **Abstract**

The automatic analyzer includes a first analysis unit performing analysis in relation to a first analysis item group; a second analysis unit performing analysis for a second analysis item group on a different measurement principle from that in the first analysis unit; a reagent housing unit housing at least one first reagent vessel containing a reagent used in analysis in the first analysis unit, and at least one second reagent vessel containing a reagent used in analysis in the second analysis unit; a stirring unit having a stirring rod for stirring solutions in the first reagent vessel and the second reagent vessel; and a controller controlling operation of the stirring unit. The controller controls operation of the stirring unit to stir solution in the second reagent vessel after the completion of stirring of solution in all of the first reagent vessels in the reagent housing unit. An automatic analyzer enabling savings in footprint and cost reduction is provided.

## Description

### Technical Field

The present invention relates to an automatic analyzer.

### Background Art

The automatic analyzer is configured to cause a reaction of blood, urine, and other biological specimens (samples) with an analytical reagent that specifically reacts with a measurement target component in the specimen, and to quantitatively detect a composite generated by the reaction so as to automatically perform a series of operations from measurement of the measurement target component to output of results.

There is a disclosed technique concerning the automatic analyzer for stirring a first reagent that does not contain magnetic particles and a second reagent that contains magnetic particles using the respective stirring rods (see Patent Literature 1).

### Citation List

### Patent Literature

Patent Literature 1: Japanese Unexamined Patent Application Publication No. 2013-250276

### Summary of Invention

### Technical Problem

Users of the automatic analyzer in a hospital and the like have been insisting on the need of space saving and cost suppression. For example, shared use of the single stirring rod for a plurality of kinds of reagents attains the space saving by reducing the number of the stirring rods and drive mechanisms as well as the cost reduction by reducing the number of parts. Meanwhile, the use of the single stirring rod causes concern for mixture of components among a plurality of kinds of reagents owing to contamination of the stirring rod, and for deterioration in the analysis accuracy owing to mixture of the reagent.

The present invention has been made in light of the above-described problems, and it is an object of the present invention to provide an automatic analyzer configured to use a single stirring rod for stirring a plurality of kinds of reagents to attain the space saving and cost reduction while suppressing deterioration in the analysis accuracy.

### Solution to Problem

The present application includes a plurality of solutions to the above-described problems. As an example of the solutions, the automatic analyzer includes a first analysis unit for performing analysis in relation to a first analysis item group, a second analysis unit for performing analysis for a second analysis item group based on a different measurement principle from that in the first analysis unit, a reagent housing unit for housing at least one first reagent vessel containing a reagent used for analysis in the first analysis unit, and at least one second reagent vessel containing a reagent used for analysis in the second analysis unit, a stirring unit having a stirring rod for stirring solution in the first reagent vessel and the second reagent vessel, and a controller for controlling operation of the stirring unit. The controller controls the operation of the stirring unit to stir solution in the second reagent vessel after the completion of stirring of solution in all of the first reagent vessels in the reagent housing unit.

### Advantageous Effects of Invention

The present invention performs operations for stirring a plurality of kinds of reagents using a single stirring rod while suppressing deterioration in the analysis accuracy. This makes it possible to attain space saving and cost reduction.

### Brief Description of Drawings

[Fig. 1] Fig. 1 is a diagram schematically illustrating an overall configuration of an automatic analyzer.
[Fig. 2] Fig. 2 is a functional block diagram schematically illustrating a configuration of an analysis unit of the automatic analyzer.
[Fig. 3] Fig. 3 is a schematic diagram partially illustrating an essential configuration of a stirring unit, a cleaning unit, and a reagent housing unit.
[Fig. 4] Fig. 4 is a schematic diagram illustrating conditions of a stirring operation and a cleaning operation.
[Fig. 5] Fig. 5 is a schematic diagram illustrating conditions of a stirring operation and a cleaning operation.
[Fig. 6] Fig. 6 is a schematic diagram illustrating conditions of a stirring operation and a cleaning operation.
[Fig. 7] Fig. 7 is a schematic diagram illustrating conditions of a stirring operation and a cleaning operation.
[Fig. 8] Fig. 8 is a schematic diagram illustrating conditions of a stirring operation and a cleaning operation.
[Fig. 9] Fig. 9 is a schematic diagram illustrating conditions of a stirring operation and a cleaning operation.
[Fig. 10] Fig. 10 is a schematic diagram illustrating conditions where reagent vessels are housed in the reagent housing unit.
[Fig. 11] Fig. 11 is a diagram illustrating the relationship between the operations in the reagent housing unit and a reading section, and information stored in a storage.
[Fig. 12] Fig. 12 a diagram illustrating the relationship between a controller and the reagent housing unit, the stirring unit and the cleaning unit.
[Fig. 13] Fig. 13 is a flowchart illustrating processing details of determination processing on stirring numbers, stirring speed, and schedules of the stirring operation and cleaning operation in the controller.
[Fig. 14] Fig. 14 is a diagram illustrating an example correspondence table for defining the relationship between the liquid volume and the stirring speed.
[Fig. 15] Fig. 15 is a schematic diagram illustrating conditions of a special cleaning operation and a water exchange operation.
[Fig. 16] Fig. 16 is a schematic diagram illustrating conditions of the special cleaning operation and the water exchange operation.
[Fig. 17] Fig. 17 is a schematic diagram illustrating conditions of the special cleaning operation and the water exchange operation.
[Fig. 18] Fig. 18 is a schematic diagram illustrating conditions of the special cleaning operation and the water exchange operation.
[Fig. 19] Fig. 19 is a schematic diagram illustrating conditions of the special cleaning operation and the water exchange operation.

### Description of Embodiments

An embodiment of the present invention will be described with reference to the drawings. The embodiment exemplifies a composite type automatic analyzer which performs a biochemical analysis and an immune analysis. However, it is possible to apply the present invention to an arbitrary automatic analyzer so long as it is configured to perform measurements based on different principles using a plurality of kinds of reagents.

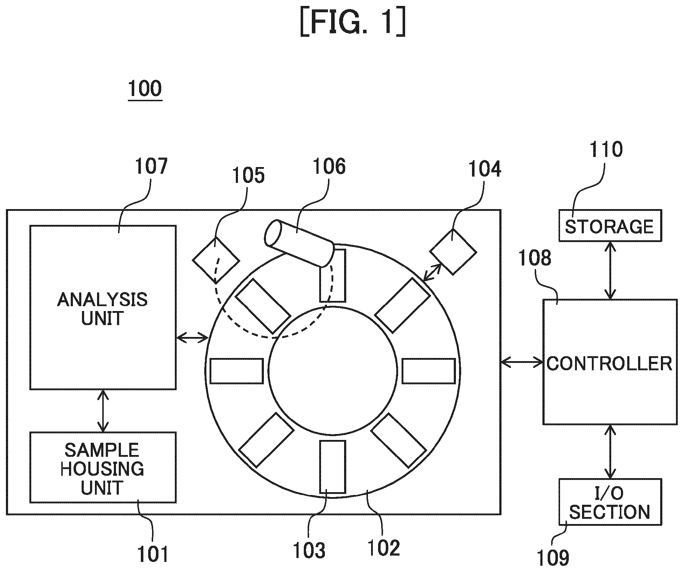

Fig. 1 is a diagram schematically illustrating an overall configuration of the automatic analyzer in the present embodiment.

As Fig. 1 illustrates, an automatic analyzer 100 is a compact composite-type apparatus capable of analyzing biochemical analysis items and immune items for analysis of a specific component contained in a sample such as blood and urine from the patient. The automatic analyzer is composed mostly of a sample housing unit 101, a reagent housing unit 102, a reagent vessel 103, a reading section 104, a cleaning unit 105, a stirring unit 106, an analysis unit 107, a controller 108, an input/output section 109, and a storage 110.

The sample housing unit 101 houses a plurality of sample vessels each storing a biological specimen such as blood and urine. For example, although not shown, the sample housing unit 101 is formed as a disc type unit where a plurality of sample vessels are arranged on a sample disc that is intermittently rotatable clockwise and counterclockwise, or formed as a rack type unit which transfers the transferrable rack on which the sample vessels are held.

The reagent housing unit 102 is formed as a disc type housing unit where a plurality of reagent vessels 103 are arranged circumferentially on a reagent disc that is intermittently rotatable clockwise and counterclockwise. The plurality of reagent vessels 103 corresponding to the analysis items of the automatic analyzer 100 are housed in the reagent housing unit. The reagent vessel 103 belongs to the biochemical item or the immune item.

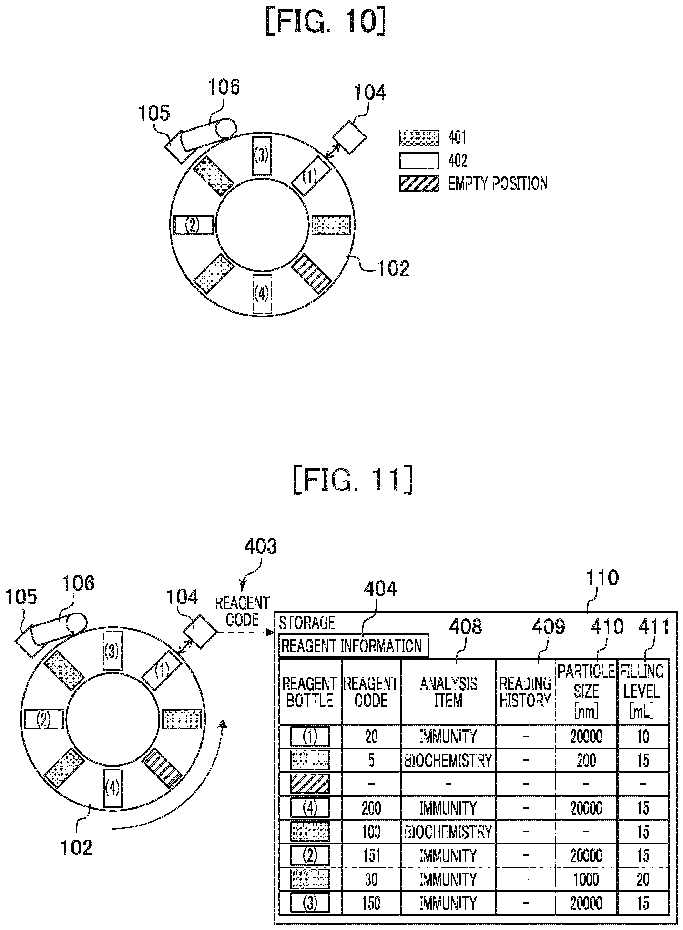

The reading section 104 is a device that reads a reagent code for identifying the reagent vessel 103. The reading section reads the respective reagent codes written to the plurality of reagent vessels 103 to transmit the read reagent code to the controller 108 (see Fig. 11 to be described later). The reagent housing unit 102 rotates to transport the reagent vessel 103 as the reagent code reading target to a reading position at which the reading section 104 reads the reagent code.

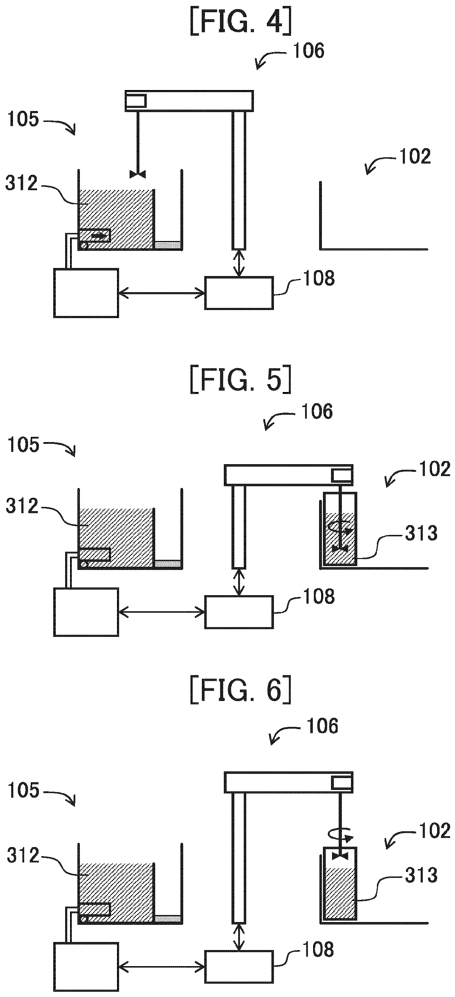

The stirring unit 106 is a device that stirs the reagent filled in the reagent vessel 103 housed in the reagent housing unit 102. The stirring unit inserts a stirring rod having its tip provided with a paddle into the reagent vessel 103 and rotates the stirring rod therein for stirring the reagent (see Figs. 5, 9, 16 to be described later). As the reagent housing unit 102 rotates, the reagent vessel 103 that stores the reagent to be stirred is transported to a stirring position at which stirring is performed by the stirring unit 106.

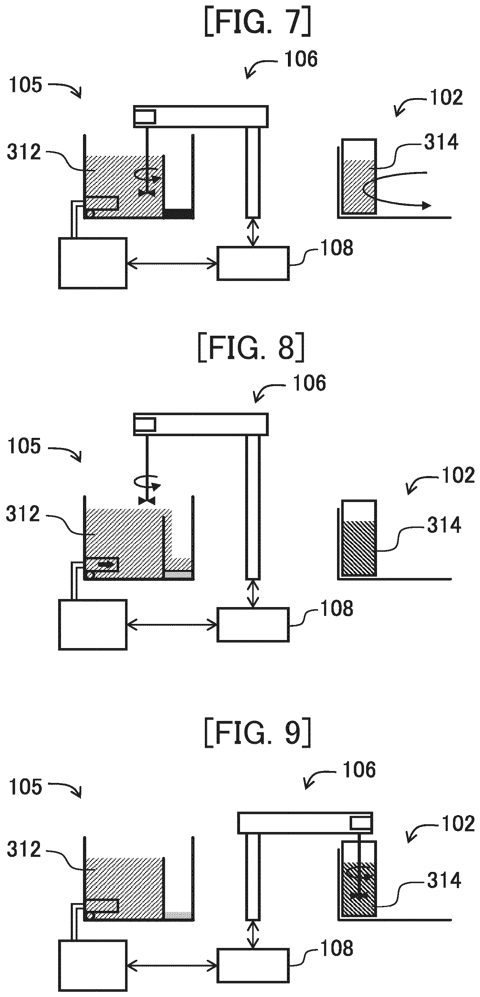

The cleaning unit 105 is a device that uses cleaning water for cleaning a mechanism of the stirring unit 106, which has been in contact with the reagent after it is stirred in the reagent vessel 103. The cleaning unit cleans the stirring unit 106 by rotating the stirring rod and the paddle in the accumulated cleaning water (see Figs. 7 and 8 as described later).

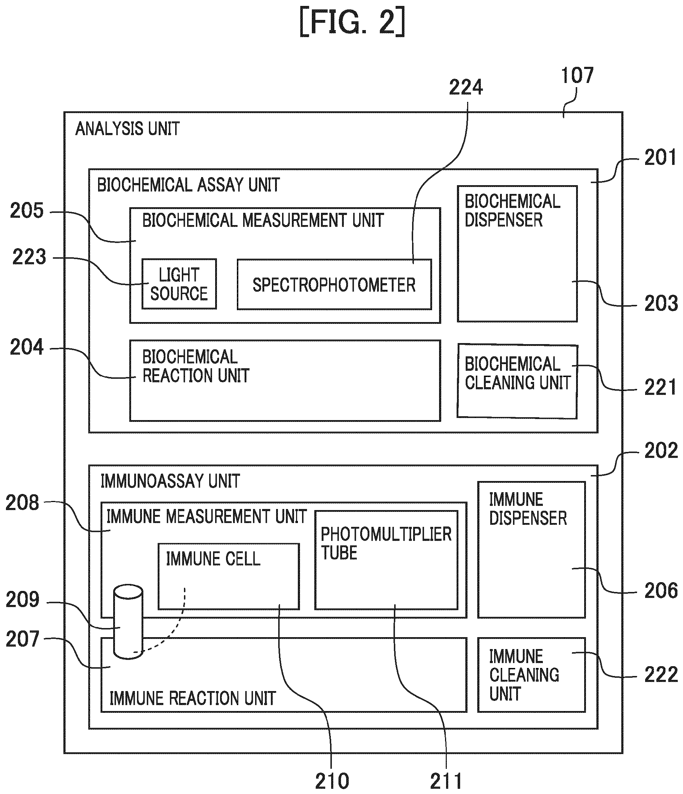

The analysis unit 107 is a device that dispenses the specimen and the reagent corresponding to the analysis item, and measures a predetermined component based on the reaction between them (see Fig. 2 as described later).

The controller 108 as a device for controlling overall operations of the automatic analyzer 100 acquires corresponding information from the storage 110 based on a signal (reagent code) transmitted from the reading section 104, controls mechanism operations of the respective components of the automatic analyzer 100, and performs arithmetic operations of analysis data derived from the measurement.

The input/output section 109 is a device that inputs data necessary for analysis and operation instructions by an operator, and displays analysis results. The input/output section is constituted by a mouse, a keyboard, a touch panel, a liquid crystal display, and the like.

The storage 110 is a device that stores the reagent information, an analysis parameter, an analysis item request, and an analysis result, and constituted by an internal/external memory, for example, an HHD (Hard Disk Drive) and an SSD (Solid State Drive).

Fig. 2 is a functional block diagram schematically illustrating a configuration of an analysis unit of the automatic analyzer.

Referring to Fig. 2, the analysis unit 107 includes analysis units that function based on different measurement principles, specifically, a biochemical assay unit 201 (first analysis unit) for analyzing biochemical items based on an absorbance measurement as a principle, and an immunoassay unit 202 biochemical assay unit (second analysis unit) for analyzing immune items based on chemoluminescence (including electrochemical luminescence) as a principle.

The biochemical assay unit 201 is composed of a biochemical dispenser 203, a biochemical reaction unit 204, a biochemical measurement unit 205, and a biochemical cleaning unit 221, and performs analysis using the reagent relating to the biochemical item.

The biochemical reaction unit 204 accommodates a plurality of reaction vessels for reaction between the specimen and the reagent. For example, the biochemical reaction unit 204 is a disc type device that can be intermittently rotated clockwise and counterclockwise, having the plurality of reaction vessels circumferentially arranged. The biochemical reaction unit 204 keeps the reaction liquid in the reaction vessel at an appropriate reaction temperature (for example, 37°C).

The biochemical dispenser 203 is a device operated by a not shown operation unit to access the sample housing unit 101, the reagent housing unit 102, the biochemical reaction unit 204, and the biochemical cleaning unit 221 for dispensing the sample and the reagent. The biochemical dispenser 203 aspirates a predetermined amount of the specimen from the sample vessel housed in the sample housing unit 101, aspirates a predetermined amount of the reagent for the biochemical item from the reagent vessel 103 in the reagent housing unit 102, and discharges the specimen and the reagent into the reaction vessel disposed in the biochemical reaction unit 204. The biochemical dispenser 203 may be imparted with the function of stirring the reaction liquid as the mixture of the specimen and the reagent. Specifically, for example, it is considered to impart the function that stirs the reaction liquid by pipetting operations of repetitive aspiration and discharging of the reaction liquid in the biochemical dispenser 203, or to impart the function using another mechanism such as the stirring rod and ultrasonic waves to cause the reaction liquid to flow so that the reaction liquid is stirred.

The biochemical measurement unit 205 includes a light source 223 and a spectrophotometer 224. The light source 223 irradiates the reaction liquid in the reaction vessel on the biochemical reaction unit 204 with light. The spectrophotometer 224 calculates an absorbance by measuring luminous intensity with respect to the wavelength, set for each inspection item, of light irradiated by the light source 223 to transmit through the reaction liquid. If the reagent contains latex particles, the scattering intensity of a condensation formed of the sample and the latex particles is measured as the absorbance.

The biochemical cleaning unit 221 is a device that cleans the biochemical dispenser 203 which has finished dispensing the specimen and the reagent to the reaction vessel. The biochemical cleaning unit 221 may be configured to clean a plurality of reaction vessels when measurement of those reaction vessels is finished by the spectrophotometer 224.

The immunoassay unit 202 is composed of an immune dispenser 206, an immune reaction unit 207, an immune measurement unit 208, and an immune cleaning unit 222, and performs analysis using the reagent relating to the immune item.

The immune reaction unit 207 accommodates a plurality of reaction vessels for reaction between the specimen and the reagent. For example, the immune reaction unit 207 is a disc type device that can be intermittently rotated clockwise and counterclockwise, having the plurality of reaction vessels circumferentially arranged. The immune reaction unit 207 keeps the reaction liquid in the reaction vessel at an appropriate reaction temperature (for example, 37°C). It is possible to provide a not shown reaction unit having functions of both the biochemical reaction unit 204 and the immune reaction unit 207 so that the reaction unit can be sharedly used by the biochemical assay unit 201 and the immunoassay unit 202.

The immune dispenser 206 is a device operated by a not shown operation unit to access the sample housing unit 101, the reagent housing unit 102, the immune reaction unit 207, and the immune cleaning unit 222 for dispensing the sample and the reagent. The immune dispenser 206 aspirates a predetermined amount of the specimen from the sample vessel housed in the sample housing unit 101, aspirates a predetermined amount of the reagent for the immune item from the reagent vessel 103 in the reagent housing unit 102, and discharges the specimen and the reagent into the reaction vessel disposed in the immune reaction unit 207. The immune dispenser 206 may be imparted with the function of stirring the reaction liquid as the mixture of the specimen and the reagent. Specifically, for example, it is considered to impart the function that stirs the reaction liquid by pipetting operations of repetitive aspiration and discharging of the reaction liquid in the immune dispenser 206, or to impart the function of vortex stirring to stir the reaction liquid by causing the reaction liquid to flow through axial rotation of the reaction vessel.

The immune measurement unit 208 is composed of an aspiration nozzle 209, an immune cell 210, and a photomultiplier tube 211. The reagent for the immune item contains magnetic particles. The magnetic particles in the reaction liquid generate a composite of the measurement target substance (target molecule) and a luminescent indicator by an antigen-antibody reaction. The immune measurement unit 208 measures the composite of the magnetic particles, the measurement target substance, and the luminescent indicator to quantitatively measure the measurement target substance.

The aspiration nozzle 209 aspirates the reaction liquid in the reaction vessel in the immune reaction unit 207, and introduces the aspirated liquid into the immune cell 210.

An electrode for measurement is provided in the immune cell 210. The composite of the measurement target substance (target molecule), the magnetic particles, and the luminescent indicator in the reaction liquid introduced into the immune cell is trapped on the electrode by the magnetic force of a not shown magnet built in the immune cell 210. In the immune cell 210, voltage is applied to the electrode so that the voltage is applied to the composite trapped on the electrode. This allows the photomultiplier tube 211 to measure the light intensity of the electrochemical luminescence emitted by the luminescent indicator of the composite. The present embodiment exemplifies the use of the electrochemical luminescence method. However, it is possible to implement such method as the chemiluminescence that causes the luminous reaction by the trigger reagent.

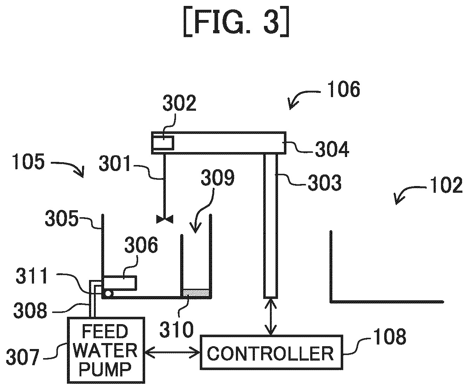

Fig. 3 schematically illustrates a structure formed of essential parts extracted from the stirring unit, the cleaning unit, and the reagent housing unit in a stand-by state.

As Fig. 3 illustrates, the stirring unit 106 is composed mostly of a stirring rod 301, a motor 302, a shaft 303, and an arm 304.

The shaft 303 is a vertically extending hollow member having the arm 304 attached to its top end. The shaft 303 has a vertical moving mechanism and a turning mechanism, which are not shown, and allows the arm 304 to be vertically moved and turned.

The arm 304 is a horizontally extending hollow member, and is supported having its end connected to the top end of the shaft 303. The bar-like stirring rod 301 extending downward from the arm 304 is attached to an end (the other end) of the arm 304, which is different from the one connected to the shaft 303.

A tip (lower end) of the stirring rod 301 is provided with the paddle for stirring the reagent in the reagent vessel 103. The motor 302 rotates the stirring rod 301 about the axis in the state where the tip of the stirring rod 301 is inserted in the reagent so as to be stirred. The motor 302 rotates the stirring rod 301 about the axis in the state where the tip of the stirring rod 301 is inserted in the liquid for cleaning (that can be referred to as the cleaning liquid). This allows cleaning of the stirring rod 301 (paddle).

The stirring unit 106 allows the shaft 303 to vertically move and turn the arm 304 so that the stirring rod 301 is moved to the stirring position at which the reagent in the reagent vessel 103 is stirred, and to the cleaning position at which the cleaning is performed in a cleaning tank 305. The motor 302 then rotates the stirring rod 301 to stir the reagent and clean the stirring rod 301. For example, if the reagent in the reagent vessel 103 contains particles, condensation of the particles is decomposed by the stirring operation of the stirring rod 301 into a uniformized state.

The cleaning unit 105 is composed mostly of the cleaning tank 305, a feed water nozzle 306, a feed water pump 307, a tube 308, a water reservoir 309, a drain outlet 310, and a drain hole 311.

The cleaning tank 305 is a bath that accumulates water as liquid (cleaning liquid) for cleaning the stirring rod 301 (and the paddle). The cleaning tank has its inner wall for separating the tank from the adjacent water reservoir 309, which is partially shorter than the other part. If the volume of water in the cleaning tank 305 exceeds a fixed volume, the excessive water overflows so as to be discharged to the water reservoir 309.

The feed water pump 307 feeds water into the cleaning tank 305 via the tube 308 and the feed water nozzle 306 based on a control signal from the controller 108.

The water reservoir 309 is a bath that accumulates water overflowing from the cleaning tank 305. Water flowing into the water reservoir 309 is discharged from the drain outlet 310 in the bottom part.

The drain hole 311 is a hole structure to be opened/closed under the control of an electromagnetic valve provided on the bottom part of the cleaning tank 305. Based on the control signal from the controller 108, the electromagnetic valve is opened so that water accumulated in the cleaning tank 305 is discharged from the drain hole 311. For discharging all the water accumulated in the cleaning tank 305, the electromagnetic valve for the drain hole 311 is opened for sufficient time to allow discharge of all the water accumulated in the cleaning tank 305.

Figs. 4 to 9 schematically illustrate the stirring unit, the cleaning unit, and the reagent housing unit, which perform operations for stirring the reagent and cleaning. Codes are partially omitted in Figs. 4 to 9 for the purpose of simplifying the drawings.

The reagent stirring operation in the present embodiment is performed during placement of the reagent and the analysis operation. The stirring operation is performed during placement of the reagent once for each reagent corresponding to the biochemical item and the immune item so as to prevent nonspecific condensation of particles contained in the reagent. Meanwhile, as for the stirring operation to be performed during the analysis operation, the stirring operation and the cleaning operation are performed once only for the reagent corresponding to the immune item just before the timing of every single dispensation of the reagent.

As Fig. 3 illustrates, when the stirring unit and the cleaning unit are in the standby state, the shaft 303 is positioned at an upper limit point to have the stirring rod 301 stopped at the position higher than the inner wall of the cleaning tank 305.

When the reading section 104 finishes reading the reagent information of all the reagent vessels 103 housed in the reagent housing unit 102, the cleaning tank 305 is filled with a maximum volume of water 312 from the feed water pump 307 via the tube 308 and the feed water nozzle 306 as illustrated in Fig. 4. The maximum volume of the water 312 is determined by the controller 108 based on water volume information preliminarily recorded in the storage 110.

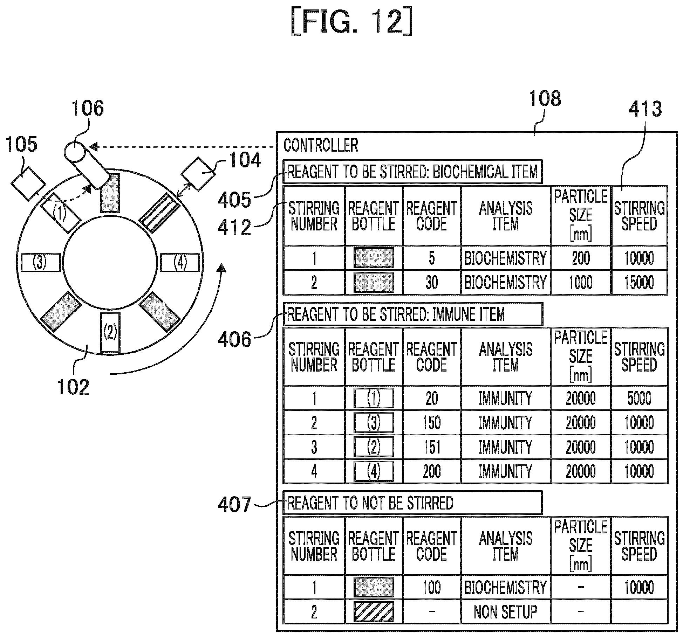

When the cleaning tank 305 is filled with the water 312, as Fig. 5 illustrates, the reagent housing unit 102 is rotated in accordance with a stirring number 412 (see Fig. 12 as described later) preliminarily specified by the controller 108. Then the reagent vessel to be stirred (in this case, it is referred to as a reagent vessel 313 to be distinguished from other reagent vessels) is moved to a position (stirring position) at which the stirring rod 301 of the stirring unit 106 is allowed to access the reagent. Specifically, the arm 304 of the stirring unit 106 is turned to move the stirring rod 301 to a position just above the reagent vessel 313. The arm 304 is moved downward by the shaft 303 to insert the stirring rod 301 into the reagent vessel 313. After the stirring rod 301 is moved downward by a fixed moving amount to a position near the bottom of the reagent vessel 313 and then stopped, the motor 302 rotates the stirring rod 301 to stir the reagent in the reagent vessel 313 in accordance with a stirring speed 413 (see Fig. 12 to be described later) specified by the controller 108.

After stirring of the reagent in the reagent vessel 313 is finished, as illustrated in Fig. **6****,** the arm 304 is moved upward by the shaft 303 so that the stirring rod 301 is moved upward to the position higher than the reagent liquid surface, and stopped. At this time, the reagent adhered to the stirring rod 301 is accumulated onto the tip of the stirring rod 301 by gravity. The motor 302 rotates the stirring rod again to scatter the reagent accumulated onto the tip of the stirring rod 301 in the reagent vessel 313.

Subsequently, the shaft 303 moves upward, as illustrated in Fig. 7, so that the stirring rod 301 is moved upward to the position higher than the reagent vessel 313, and stopped. The turning operation of the arm 304 moves the stirring rod 301 to the position just above the cleaning tank 305. Thereafter, the shaft 303 moves downward to insert the stirring rod 301 into the cleaning tank 305 so that the stirring rod is further moved downward to the position near the bottom by the fixed moving amount, and stopped. In accordance with the stirring speed 413 specified by the controller 108 (see Fig. 12 as described later), the motor 302 rotates the stirring rod 301. While the motor 302 is rotating the stirring rod 301, the reagent housing unit 102 is rotated to move a next reagent vessel 314 to the stirring position in accordance with the stirring number 412 (see Fig. 12 as described later) specified by the controller 108.

As Fig. 8 illustrates, the shaft 303 moves the arm 304 upward so that the stirring rod 301 is moved upward to the position higher than the water surface in the cleaning tank 305, and stopped. At this time, water (cleaning liquid) adhered to the stirring rod 301 is accumulated onto the tip of the stirring rod 301 by gravity. In this state, the motor 302 rotates the stirring rod 301 again to scatter the water accumulated onto the tip of the stirring rod 301 in the cleaning tank 305. Concurrently with the rotation of the stirring rod 301, a fixed volume of the water 312 is supplied to the cleaning tank 305 from the feed water pump 307 via the tube 308 and the feed water nozzle 306. The same volume of water 312 as that of the supplied water overflows from the upper end of the inner wall of the cleaning tank 305 to the water reservoir 309 so that the overflowing water is discharged from the drain outlet 310. As a result, the water 312 in the cleaning tank 305 is replaced.

Subsequent to replacement of the water 312 in the cleaning tank 305, as illustrated in Fig. 9, in accordance with the stirring number 412 (see Fig. 12 as described later) specified by the controller 108, the stirring rod 301 stirs the reagent in the next reagent vessel 314. This operation is similar to the one as described referring to Fig. 5.

The processing flow of the stirring operation and the cleaning operation will be described.

Fig. 10 is a schematic diagram illustrating conditions where reagent vessels are housed in the reagent housing unit. Fig. 11 is a diagram illustrating the relationship between the operations in the reagent housing unit and a reading section, and information stored in a storage, and Fig. 12 a diagram illustrating the relationship between a controller and the reagent housing unit, the stirring unit and the cleaning unit, respectively.

When performing the stirring operation of the reagent in the reagent vessel 103 housed in the reagent housing unit 102, and the cleaning operation of the stirring unit, the controller 108 determines the stirring number 412 and the stirring speed 413 from a reagent code 403 read by the reading section 104, and controls to execute the stirring operation by the stirring unit 106 and the cleaning operation by the cleaning unit 105.

As Fig. 10 illustrates, in the reagent housing unit 102, a group of the reagent vessels 103 belonging to the biochemical item (referred to as a reagent vessel group 401 to be distinguished from other reagent vessels), and a group of the reagent vessels 103 belonging to the immune item (referred to as a reagent vessel group 402 to be distinguished from other reagent vessels) are randomly placed.

As Fig. 11 illustrates, in the state where the reagent vessel groups 401, 402 are housed in the reagent housing unit, the reagent housing unit 102 is rotatively moved, and the reading section 104 reads the reagent codes 403 of the reagent vessels 103 of the placed reagent vessel groups 401, 402 so that the read codes are transmitted to the controller 108. The controller 108 receives a signal of the reagent code 403 read by the reading section 104, and refers to reagent information 404 preliminarily stored in the storage 110 with respect to the reagent information corresponding to the received reagent code 403 for acquiring the corresponding information.

The reagent code 403 is a number specified for each kind of the reagent stored in the reagent vessel 103. The reagent information 404 is stored in the storage 110 in the state where the reagent code 403 is associated with the information relating to each reagent. Specifically, the reagent code 403, an analysis item 408, a reading history 409, a particle size 410, and a filling level 411 are recorded as the reagent information 404.

The analysis item 408 represents either the biochemical item or the analysis item as the item that can be measured by the automatic analyzer 100. If the reagent vessel group 401 belonging to the biochemical item, or the reagent vessel group 402 belonging to the immune item is not placed, the item is expressed by "-" in Fig. 11 indicating that there is no information.

The reading history 409 represents the history, expressed by the date and time, of the reagent code 403 of the reagent vessel 103 as a reading target, which has been read by the automatic analyzer 100 or any other automatic analyzer before. If the code has not been read (no reading history), the reading history is expressed by "-" in Fig. 11 indicating that there is no information.

The particle size 410 represents a diameter of the particle contained in the reagent. If the reagent contains a plurality of kinds of particles each having a different particle size, the particle size is expressed by the diameter of the particle as the main component. If the reagent does not contain particles, the particle size is expressed by "-" in Fig. 11 indicating that there is no information.

The filling level 411 represents a volume of the reagent filled in each of the reagent vessels 103 of the reagent vessel groups 401, 402.

As Fig. 12 illustrates, the controller 108 determines the stirring number 412 corresponding to the subject reagent, the stirring speed 413, and schedules of the stirring operation and the cleaning operation based on the reagent information 404 in the storage 110.

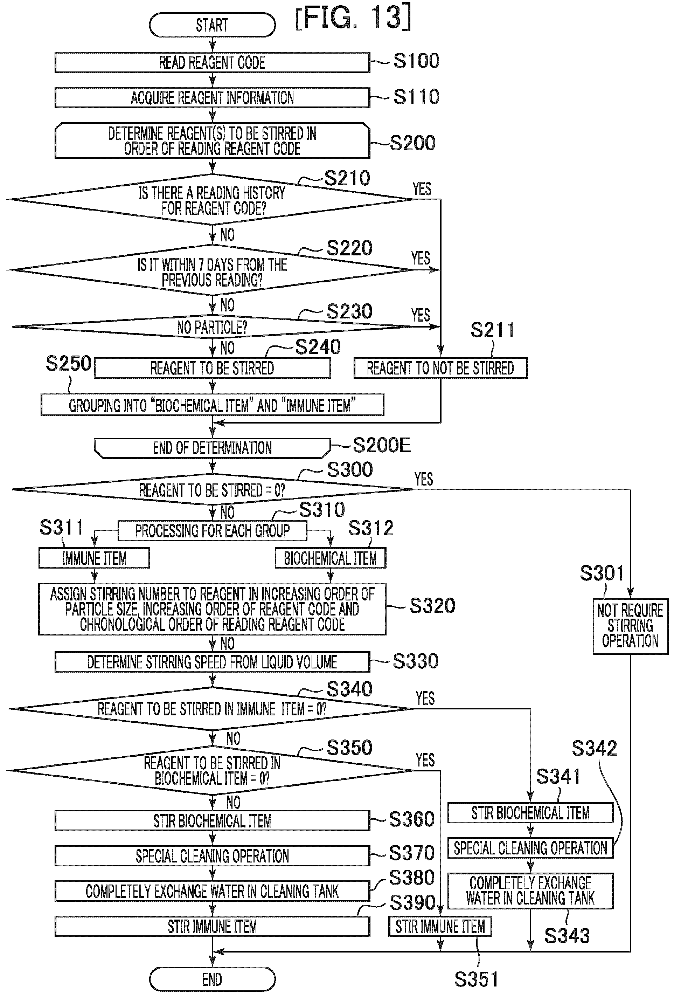

Fig. 13 is a flowchart illustrating processing details of determination processing on stirring numbers, stirring speed, and schedules of the stirring operation and cleaning operation in the controller.

As Fig. 13 illustrates, after the controller 108 reads the reagent code 403 via the reading section 104 (step S100), and acquires the reagent information 404 based on the reagent code 403 (step S1102), the controller 108 executes the process of determining the need of stirring all the reagents (hereinafter referred to as a stirring need determination process) (steps S200 to S200E).

In the stirring need determination process, it is determined whether or not there is a reagent code reading history (step S210), whether or not the number of days elapsed from the previous reading is within seven days (step S220), and whether or not the reagent contains no particle (step S230). If the determination result in any one of steps S210 to S230 is YES, it is determined that the subject reagent is a reagent to not be stirred (see reagent to not be stirred 407) (step S211) to end the stirring need determination process (step S200E).

If all determination results in steps S210 to S230 are NO, it is determined that the subject reagent is a reagent to be stirred (step S240) (see reagent to be stirred 405, 406 as illustrated in Fig. 12). In accordance with the analysis item, the reagent is classified into the group of reagents to be stirred 405 for the "biochemical item", or the group of reagents to be stirred 406 for the "immune item" (step S250). The stirring need determination process ends (step S200E).

Subsequent to the end of the stirring need determination process, it is determined whether or not the number of reagents to be stirred 405, 406 is zero (step S300). If the determination result is YES, that is, there is no reagent to be stirred, it is determined that the stirring operation is not required (step S301), and the process ends.

If the determination result in step S300 is NO, that is, the number of the reagents to be stirred 405, 406 is one or more, the stirring number 412 is assigned to the biochemical item group and the immune item group, respectively (steps S310, S311, S312, S320).

In the process of step S320, the stirring number 412 is assigned as described below. Specifically, the stirring number 412 is assigned to the reagent in order from the smaller particle size 410. If the reagent information 404 recorded in the storage 110 includes a plurality of kinds of particle sizes 410, the particle size of the main particle contained in the reagent is referred.

If there are reagents each having the same particle size 410, the stirring number 412 is assigned to the reagent in order from the smaller reagent code 403.

If there are reagents each having the same reagent code 403, the stirring number 412 is assigned to the reagent in order from the older reading history 409 of the reagent code 403, which has been read by the reading section 104.

In the process from steps S100 to S320, the randomly disposed reagents are classified into the biochemical item group and the immune item group, and the stirring number 412 is assigned to the reagent in the respective groups. This makes it possible to suppress mixture of the biochemical reagent with the immune reagent or vice versa owing to contamination of the stirring rod 301.

Upon measurement of the particle scattering by the biochemical measurement unit 205, as the particle size 410 becomes larger, the influence of noise to the wavelength except the one required to be measured becomes more significant. The stirring operation is performed in order from the smaller particle size 410 to prevent mixture of the reagent with larger particle size 410 with the reagent with smaller particle size 410 among those belonging to the same analysis item, resulting in improved measurement accuracy.

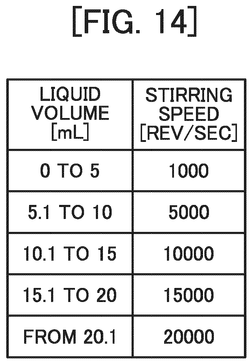

Subsequent to the end of the process in step S320 for assignment of the stirring number 412, the stirring speed 413 is determined based on the liquid volume of the reagent information (step S320). Fig. 14 is a diagram illustrating an example correspondence table for defining the relationship between the liquid volume and the stirring speed. The correspondence table is preliminarily specified and stored in the storage 110 and the like. The stirring speed 413 represents a rotational speed of the stirring rod 301 per unit time. In the present embodiment, as Fig. 14 illustrates, the stirring speed 413 is changed in accordance with the liquid volume to prevent scattering of the liquid, and allows improvement of the stirring efficiency. The present embodiment describes the stirring operation by changing the stirring speed in accordance with the liquid volume as an example. However, it is not limited to the above-described example, but may be configured to change the stirring operation in accordance with the number of days elapsed from the previous reading in the reagent code reading history, for example. Specifically, it is considered to reduce the stirring time, or lower the paddle rotational speed in accordance with the number of days elapsed from the previous reagent code reading.

It is determined whether the number of the reagents to be stirred for the immune item is zero (step S340). If the determination result is YES, that is, there is no reagent to be stirred for the immune item, and there are only reagents to be stirred for the biochemical item, the reagents for the biochemical item are all stirred in accordance with the stirring number 412 (step S341). Special cleaning operations are performed (step S342). All the water in the cleaning tank 305 is completely exchanged (step S343). The process then ends. The special cleaning operation represents a cleaning operation for removing the contamination derived from protein such as an antibody for modifying the surface of the latex particle adhered to the stirring rod 301. Complete exchange of all the water in the cleaning tank 305 in step S343 represents an operation for removing the contamination originating from the latex particle that remains in water.

If the determination result in step S340 is NO, that is, there exists the reagent to be stirred for the immune item, it is then determined whether the number of the reagents to be stirred for the biochemical item is zero (step S350). If the determination result in step S350 is YES, that is, there is no reagent to be stirred for the biochemical item, but there exists only the reagent to be stirred for the immune item, all the reagents for the immune item are stirred in accordance with the stirring number 412 (step S351). The process then ends.

If the determination result in step S350 is NO, that is, there exist the reagents to be stirred for both the biochemical item and the immune item, all the reagents for the biochemical item are stirred in accordance with the stirring number 412 (step S360). The special cleaning operation is performed (step S370). All the water in the cleaning tank 305 is completely exchanged (step S380). All the reagents for the immune item are stirred in accordance with the stirring number 412 (step S390). The process then ends.

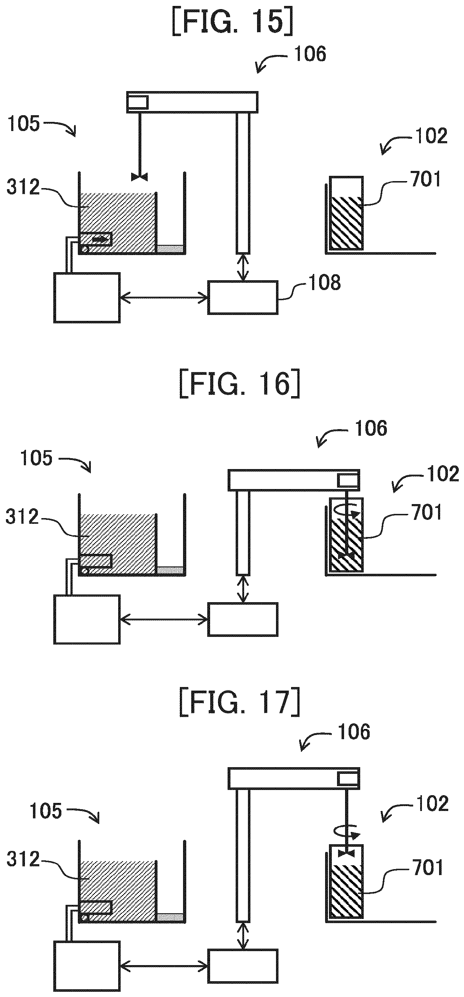

Figs. 15 to 19 schematically illustrate the special cleaning operation and the water exchanging operation by the cleaning unit. Codes are partially omitted in Figs. 15 to 19 for the purpose of simplifying the drawings.

The special cleaning operation (see steps S342, S370 in Fig. 13) and the operation for completely exchanging water in the cleaning tank (see steps S342, S380 in Fig. 13) are performed within the specified time assigned to the stirring operation.

After the end of the stirring operation for all the reagents to be stirred for the biochemical item (see steps S341, S360 in Fig. 13), the reagent housing unit 102 rotates as illustrated in Fig. 15 to move a detergent vessel 701 to a position that can be accessed by the stirring rod 301 of the stirring unit 106. The detergent filled in the detergent vessel 701 is determined in accordance with the material of the stirring rod 301, and the component of the reagent to be used. The buffer solution having the pH adjusted using sodium hydroxide and hydrochloric acids, for example, is considered as the detergent.

Upon completion of movement of the detergent vessel 701, the arm 304 is turned by the shaft 303 of the stirring unit 106 to move the stirring rod 301 to the position just above the detergent vessel 701. The arm 304 is moved downward by the shaft 303 so that the stirring rod 301 is inserted into the detergent vessel 701. In accordance with the stirring speed 412 as specified by the controller 108, the motor 302 rotates the stirring rod 301 to be cleaned with the solution in the detergent vessel 701. The stirring rod 301 is moved downward to the position near the bottom of the detergent vessel 701 by the fixed moving amount, and stopped.

As Fig. 17 illustrates, the arm 304 is moved upward by the shaft 303 so that the stirring rod 301 is moved upward to the position higher than the detergent surface in the detergent vessel 701, and stopped. At this time, the detergent adhered to the stirring rod 301 is accumulated onto the tip of the stirring rod 301 by gravity. The motor 302 rotates the stirring rod 301 again to scatter the detergent accumulated onto the tip of the stirring rod 301 in the detergent vessel 701.

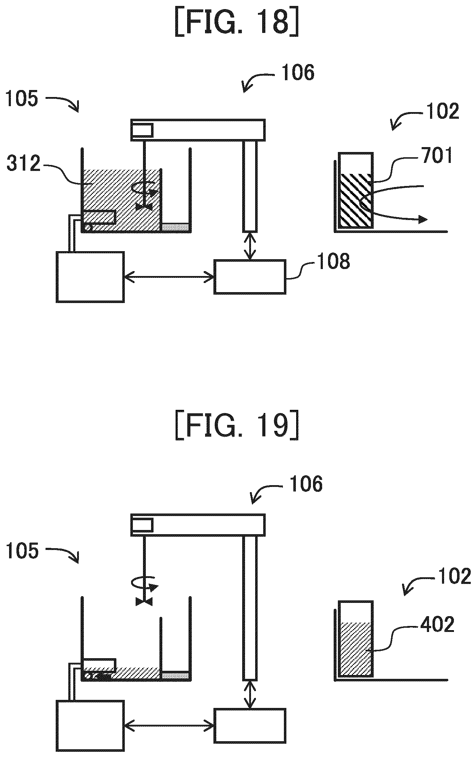

As Fig. 18 illustrates, the shaft 303 moves the arm 304 upward so that the stirring rod 301 is moved upward to the position higher than the detergent vessel 701, and stopped. The shaft 303 turns the arm 304 to move the stirring rod 301 to the position just above the cleaning tank 305. In this state, the shaft 303 moves the arm 304 downward to insert the stirring rod 301 into water in the cleaning tank 305. At this time, the stirring rod 301 is moved downward to the position near the bottom of the cleaning tank 305 by the fixed moving amount, and stopped. Thereafter, in accordance with the stirring speed as specified by the controller 108, the motor 302 rotates the stirring rod 301. While the motor 302 is rotating the stirring rod 301, the reagent housing unit 102 is rotated to move the reagent vessel 103 of the reagent vessel group 402 belonging to the immune item as determined in accordance with the stirring number 412 to the stirring position. The water 312 in the cleaning tank 305 is contaminated by the reagent, latex particles, protein that modifies the latex surface, and the detergent.

As Fig. 19 illustrates, all the contaminated water in the cleaning tank 305 is completely discharged from the drain hole 311 under the control of the controller 108.

After discharging all the contaminated water, the cleaning tank 305 is filled with water 312 to the maximum volume from the feed water pump 307 via the tube 308 and the feed water nozzle 306, resulting in complete exchange of water in the cleaning tank.

The above-configured embodiment performs operations for stirring a plurality of kinds of reagents using a single stirring rod while suppressing deterioration in the analysis accuracy. This makes it possible to attain space saving and cost reduction.

### <Addition>

The present invention is not limited to the embodiment as described above, but may be variously modified and combined without departing from the scope of the present invention. The present invention is not limited to the configuration that includes all the structures of the above-described embodiment. Furthermore, the structures may be partially deleted. It is possible to implement the respective configurations and functions either partially or fully by designing using, for example, the integrated circuit. The respective configurations and functions may be implemented by software that allows the processor to interpret and execute the program for implementing the respective functions.

### List of Reference Signs

- 100: Automatic analyzer
- 101: Sample housing unit
- 102: Reagent housing unit
- 103: Reagent vessel
- 104: Reading section
- 105: Cleaning unit
- 106: Stirring unit
- 107: Analysis unit
- 108: Controller
- 109: Input/output section
- 110: Storage
- 201: Biochemical assay unit
- 202: Immunoassay unit
- 203: Biochemical dispenser
- 204: Biochemical reaction unit
- 205: Biochemical measurement unit
- 206: Immune dispenser
- 207: Immune reaction unit
- 208: Immune measurement unit
- 209: Aspiration nozzle
- 210: Immune cell
- 211: Photomultiplier tube
- 221: Biochemical cleaning unit
- 222: Immune cleaning unit
- 223: Light source
- 224: Spectrophotometer
- 301: Stirring rod
- 302: Motor
- 303: Shaft
- 304: Arm
- 305: Cleaning tank
- 306: Feed water nozzle
- 307: Feed water pump
- 308: Tube
- 310: Drain outlet
- 311: Drain hole
- 312: Water
- 313: Reagent vessel
- 314: Reagent vessel
- 401: Reagent vessel group
- 402: Reagent vessel group
- 403: Reagent code
- 404: Reagent information
- 405: Reagent to be stirred
- 406: Reagent to be stirred
- 407: Reagent to not be stirred
- 408: Analysis item
- 409: Reading history
- 410: Particle size
- 411: Filling level
- 412: Stirring speed
- 413: Stirring speed
- 701: Detergent vessel

## Claims

1. An automatic analyzer, comprising:
a first analysis unit performing analysis in relation to a first analysis item group;
a second analysis unit performing analysis for a second analysis item group on a different measurement principle from that in the first analysis unit;
a reagent housing unit housing at least one first reagent vessel containing a reagent used in analysis in the first analysis unit, and at least one second reagent vessel containing a reagent used in analysis in the second analysis unit;
a stirring unit having a stirring rod for stirring solution in the first reagent vessel and the second reagent vessel; and
a controller controlling operation of the stirring unit,
wherein the controller controls operation of the stirring unit to stir solution in the second reagent vessel after the completion of stirring of solution in all of the first reagent vessels in the reagent housing unit.

2. The automatic analyzer according to claim **1,**
wherein the first analysis item group includes biochemical analysis items, and
the second analysis item group includes immune analysis items.

3. The automatic analyzer according to claim **1,** further comprising a cleaning tank containing liquid for cleaning the stirring rod,
wherein the controller controls operation of the stirring unit and operation of the cleaning tank to cause the stirring rod to be cleaned in the cleaning tank after the completion of stirring of solution in all of the first reagent vessels in the reagent housing unit and before stirring of solution in the second reagent vessel.

4. The automatic analyzer according to claim 3,
wherein the controller controls the cleaning tank to cause liquid for cleaning the stirring rod to be fully replaced after the completion of stirring of solution in all of the first reagent vessels in the reagent housing unit and before stirring of solution in the second reagent vessel.

5. The automatic analyzer according to claim 1,
wherein the controller controls the stirring unit to stir in order of increasing particle size of beads included in a reagent.

6. The automatic analyzer according to claim 1,
wherein the controller controls a rotational speed of the stirring rod in accordance with a liquid volume of a reagent for control on the stirring unit.

7. The automatic analyzer according to claim 1, further comprising a reading section for reading information on a reagent contained in a reagent vessel housed in the reagent housing unit,
wherein the controller determines based on information read at the reading section whether the reagent vessel is a first reagent vessel or a second reagent vessel.
